# EUROPÄISCHE PATENTSCHRIFT

(11) **EP 0 589 413 B1**
(45) Veröffentlichungstag und Bekanntmachung des Hinweises auf die Patenterteilung: **30.10.1996**
(21) Anmeldenummer: 93115187.2
(22) Anmeldetag: 21.09.1993
(51) Int. Cl.: F16L 33/207

(54) **Zum Anschliessen eines Endabschnittes eines Rohres vorgesehene Anschlussvorrichtung**
Pipe end fitting
Raccord à collerette pour bout de tuyau

(30) Priorität: 22.09.1992 DE 4231623
(43) Veröffentlichungstag der Anmeldung: 30.03.1994
(73) Patentinhaber: UNICOR ROHRSYSTEME GmbH, D-97437 Hassfurt (DE)
(72) Erfinder: Rahn, Horst, D-97437 Hassfurt (DE)
(74) Vertreter: Pöhlau, Claus, Dipl.-Phys.

(56) Entgegenhaltungen:
- EP-A- 0 057 920
- EP-A- 0 258 524
- AU-A- 430 484
- DE-A- 2 305 466
- DE-U- 9 102 495
- GB-A- 2 035 498
- US-A- 4 817 997
- US-A- 5 044 671

## Beschreibung

Die Erfindung betrifft eine zum Anschließen eines Endabschnittes eines Rohres vorgesehene Anschlußvorrichtung mit einer am Rohrendabschnitt innen abdichtend anliegenden Stützhülse und mit einer diese konzentrisch umgebenden, am Rohrendabschnitt außen anliegenden Außenhülse, die mit der Stützhülse mittels eines Verbindungsabschnittes verbunden ist, und mit einem Kupplungselement, das auf der von der Stütz- und der Außenhülse abgewandten Seite des Verbindungsabschnittes vorgesehen ist, wobei die Außenhülse aus einem plastisch verformbaren Material besteht und eine Verpreßhülse bildend von außerhalb der Vorrichtung mittels eines geeigneten Verformwerkzeugs zugänglich und plastisch derart verformbar ist, daß der Rohrendabschnitt entlang mindestens eines Fixierabschnittes zwischen der Außen- und der Stützhülse abdichtend fixiert ist, das Kupplungselement vom Verbindungsabschnitt einstückig wegsteht, die ein Aufweiten des Rohrendabschnittes vermeidende Stützhülse, der Verbindungsabschnitt und das Kupplungselement einen einstückigen Fittingkörper bilden, die Außenhülse aus einem vom Material des Fittingkörpers verschiedenen Material besteht und am Verbindungsabschnitt des Fittingkörpers dadurch fixiert ist, daß die Außenhülse mit dem Fittingkörper verpreßt ist, und die Stützhülse des Fittingkörpers an ihrer Außenmantelfläche mindestens eine umlaufende Rille zur Aufnahme einer Ringdichtung aufweist und mit einer umlaufenden Sägezahnung ausgebildet ist.

Aus der EP 0 152 723 Bl ist eine Anschlußvorrichtung bekannt, bei welcher die Stützhülse mit der Außenhülse mittels des Verbindungsabschnittes einstückig verbunden, um einen auf den Rohrendabschnitt aufzusetzenden Klemmschuh zu bilden. Diese bekannte Anschlußvorrichtung weist außer dem besagten Klemmschuh auch noch eine aus zwei Teilen bestehende Überwurfmutter sowie ein vom Klemmschuh und von der zweiteiligen Überwurfmutter getrenntes Kupplungselement auf. Diese Anschlußvorrichtung besteht also aus einer Vielzahl von Einzelteilen, was einen entsprechenden Herstellungs- und Manipulationsaufwand darstellt. Die Überwurfmutter bedingt außerdem Außenabmessungen der Anschlußvorrichtung, die im Vergleich zum Durchmesser des Rohres, an welches die Anschlußvorrichtung dicht angeschlossen wird, groß sind. Das ist insbes. dann von Nachteil, wenn mit solchen Anschlußvorrichtungen versehene Rohrleitungen isoliert werden sollen, weil dann infolge der Anschlußvorrichtungen große Durchmessersprünge gegeben sind. Ab einer bestimmten Größenordnung des Rohrdurchmessers kommt noch hinzu, daß zum Verschrauben der Überwurfmutter ein großes Anzugs-Drehmoment erforderlich ist, das mit einem normalen Werkzeug wie einem Schraubenschlüssel oder einer Rohrzange manuell nicht mehr realisierbar ist. Außerdem ist zu beachten, daß während des Anziehens der Überwurfmutter gleichzeitig das entsprechende Rohr gehalten werden muß, um das Rohr nicht unerwünscht zu verwinden.

Deshalb wurde auch bereits eine Anschlußvorrichtung zum Anschließen eines Endabschnittes eines Rohres vorgeschlagen, die als Preßfitting ausgebildet ist, an welchem der entsprechende Endabschnitt eines Rohres mittels einer geeigneten Preßzange dicht verpreßt wird. Diese Anschlußvorrichtung (sh. die Prospekte der Fa. Geberit GmbH, W-7798 Pfullendorf, GD/1418/4.92/50.0 KE&P 5338 bzw. GD/1414/4.92/8.0 BV 5.286) weist also keine Überwurfmutter auf, so daß keine Durchmessersprünge auftreten, wie sie oben erwähnt worden sind. Eine solche bekannte Anschlußvorrichtung ist jedoch nur mit Rohren kombinierbar, die mit Hilfe eines geeigneten Preßwerkzeugs verpreßbar sind. Das bedeutet jedoch andererseits, daß derartige Rohre oftmals nicht mehr von Hand wunschgemäß gebogen werden können, bzw. daß zum Biegen dieser Rohre geeignete Biegewerkzeuge erforderlich sind.

Desweiteren sind Fittingverbindungen für Rohre, insbes. für Mehrschicht-Metall-Verbundrohre, bekannt, bei welchen der dichte Anschluß eines Rohrendabschnittes an den Anschlußfitting dadurch hergestellt wird, daß das Rohrende trichterförmig aufgeweitet und anschließend mittels einer Überwurfmutter mit einem Konuselement verpreßt wird. Diese Art von Fittingverbindung ist insbes. dann nachteilig, wenn sie bei Verbundrohren mit einer sehr dünnen Metallschicht zur Anwendung gelangt, weil es dann beim Aufweiten zu einem Reißen der eine Diffusionssperrlage bildenden Metallschicht kommen kann.

Aus der US-PS 35 40 486 ist eine Anschlußvorrichtung bekannt, bei der die Außenhülse mit der hierzu zentrischen Stützhülse mittels des Verbindungsabschnittes einstückig ausgebildet ist. Das stellt einen erheblichen Arbeitsaufwand zur Herstellung der Anschlußvorrichtung dar. Um an der Stützhülse die dort vorgesehen Zähne ausbilden zu können, muß die Außenhülse entweder ursprünglich von der Stützhülse radial wegstehen, was einen erheblichen Arbeitsaufwand darstellt, um die besagte Stützhülse nach der Ausbildung der Zähne zur Stützhülse hin umzubiegen.

Eine Anschlußvorrichtung der eingangs genannten Art ist der US-PS 45 22 435 bekannt. Dort besteht die Außenhülse aus einen tiefziehfähigen Blech, sie bildet die Außenhülse und den Verbindungsabschnitt. Die Festlegung dieses Gebildes aus Außenhülse und Verbindungsabschnitt an der zentrischen Stützhülse kann beispielsweise durch Schweißen erfolgen. Gemäß der zuletzt genanten US-A 45 22 435 erfolgt die Festlegung des Gebildes aus Außenhülse und Verbindungsabschnitt an der zentrischen Stützhülse dadurch, daß die Stützhülse mit einem Wulst ausgebildet wird. Hier ist es also notwendig, die Stützhülse mit einem Wulst auszubilden. Außerdem ergibt sich der Mangel, daß das Gebilde aus Außenhülse und Verbindungsabschnitt an der Stützhülse verschiebbar und folglich nicht unverlierbar angeordnet ist, was die Lagerung einer solchen bekannten Anschlußvorrichtung insgesamt und deren Handhabung beeinträchtigt.

Die DE-AS 19 24 225 offenbart eine Anschlußvorrichtung, bei der die Stützhülse mit dem Kupplungselement eine Einheit bildet, und bei welcher der Verbindungsabschnitt und die Außenhülse jeweils vom dem einstückigen Gebilde aus Stützhülse und Kupplungselement getrennte Teile bilden. Das wirkt sich auf die Herstellungskosten der Anschlußvorrichtung insgesamt nachteilig aus, weil es dort erforderlich ist, nicht nur alle diese Einzelteile voneinander getrennt herzustellen, sondern weil es insbesondere notwendig ist, alle diese Einzelteile zur fertigen Anschlußvorrichtung zusammenzubauen.

Der Erfindung liegt die Aufgabe zugrunde, eine Anschlußvorrichtung der eingangs genannten Art zu schaffen, die einfach und preisgünstig herstellbar und die einfach handhabbar ist, und die mit einem Endabschnitt eines Rohres sicher und zuverlässig abdichtend verbindbar ist.

Diese Aufgabe wird erfindungsgemäß dadurch gelöst, daß der Fittingkörper aus porenfrei vernickeltem, weichgeglühtem Messing oder aus Rotguß und die Außenhülse aus einem korrosionsfesten Material, vorzugsweise aus Edelstahl, besteht, daß der Verbindungsabschnitt einstückig mit einem zur Stützhülse konzentrischen Kragen ausgebildet ist, und daß die Außenhülse durch Verpressen des Kragens am Fittingkörper fixiert ist.

Die erfindungsgemäße Anschlußvorrichtung ist einfach ausgebildet und mittels eines geeigneten Verformwerkzeugs am Endabschnitt eines entsprechenden Rohres dicht befestigbar. Bei dem Verformwerkzeug handelt es sich zweckmäßigerweise um eine elektrisch betriebene Verpreßzange. Weitere mit der erfindungsgemäßen Anschlußvorrichtung erzielte Vorteile bestehen in der relativ kleinen Baugröße der Anschlußvorrichtung, die für Rohre beliebigen Durchmessers problemlos geeignet ist, wobei ohne die Ausübung von Drehmomenten eine zuverlässige, dichte und unlösbare Verbindung der Anschlußvorrichtung mit einem entsprechenden Rohr möglich ist. Da zwischen der Anschlußvorrichtung und einem entsprechenden Rohr quasi keine Durchmessersprünge vorhanden sind, eignet sich die erfindungsgemäße Anschlußvorrichtung bspw. auch für Unterputz-Installationen oder für Installationen in einem Estrichbelag. Durch die quasi einteilige Ausbildung der erfindungsgemäßen Anschlußvorrichtung ist ihre Herstellung, Lagerhaltung und Handhabung einfach.

Verwendung findet die erfindungsgemäße Anschlußvorrichtung vorzugsweise zum dichten Anschließen an einen Endabschnitt eines Mehrschicht-Metall-verbundrohres bzw. zum dichten Anschließen an einen Endabschnitt eines eine dünne Metall-Diffusions-Sperrlage aufweisenden Mehrschicht-Metall-Verbundrohres.

Nachfolgend wird ein in der Zeichnung teilweise aufgeschnitten gezeichnetes Ausführungsbeispiel der erfindungsgemäßen Anschlußvorrichtung beschrieben. Es zeigen:
- Fig. 1: eine Ausbildung der Anschlußvorrichtung allein, d.h. ohne zugehöriges Rohr, im Originalzustand, und
- Fig. 2: die Anschlußvorrichtung gemäß Fig. 1 mit einem Endabschnitt eines Rohres, das an die Anschlußvorrichtung dicht angeschlossen und an der Anschlußvorrichtung fixiert ist.

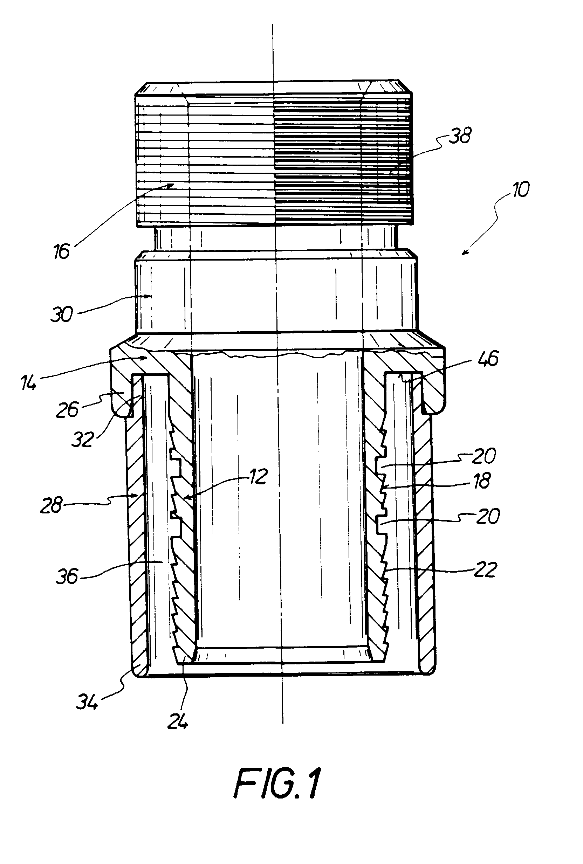

Fig. 1 zeigt eine Anschlußvorrichtung 10 mit einer Stützhülse 12, die einstückig mit einem Verbindungsabschnitt 14 und mit einem Kupplungselement 16 ausgebildet ist. Die Stützhülse 12 ist an ihrer Außenmantelfläche 18 mit zwei voneinander axial beabstandeten umlaufenden Rillen 20 sowie mit einer umlaufenden Sägezahnung 22 ausgebildet. Die Sägezahnung 22 ist vom stirnseitigen Endabschnitt 24 der Stützhülse 12 zum Verbindungsabschnitt 14 hin profiliert.

Der mit der Stützhülse 12 einstückig verbundene Verbindungsabschnitt 14 ist mit einem zur Stützhülse 12 konzentrischen Kragen 26 ausgebildet, der zum Fixieren einer Außenhülse 28 dient.

Die Stützhülse 12, der Verbindungsabschnitt 14 und das Kupplungselement 16 bilden einen Fittingkörper 30, an dem die Außenhülse 28 durch Verpressung fixiert ist. Zu diesem Zweck sind der Kragen 26 des Verbindungsabschnittes 14 und der entsprechende Endabschnitt 32 der Außenhülse 28 abmessungsmäßig aneinander geeignet angepaßt.

Die die Stützhülse 12 koaxial umgebende Außenhülse 28 bildet eine Verpreßhülse, deren zweiter Endabschnitt 34 sich in der Nachbarschaft des stirnseitigen Endabschnittes 24 der Stützhülse 12 befindet. Zwischen der eine Verpreßhülse bildenden Außenhülse 28 und der Stützhülse 12 ist ein Ringraum ausgebildet, der innenseitig durch den Verbindungsabschnitt 14 des Fittingkörpers 30 bzw. durch eine ringförmige Grundfläche 46 des Verbindungsabschnittes 14 begrenzt ist.

Das Kupplungselement 16 des Fittingkörpers 30 ist bei dem in der Zeichnung dargestellten Ausführungsbeispiel der Anschlußvorrichtung 10 mit einem Außengewindeabschnitt 38 ausgebildet, mit welchem die Anschlußvorrichtung 10 an einer geeigneten Anschlußarmatur dicht festschraubbar ist. Selbstverständlich kann das Kupplungselement 16 auch anders ausgebildet sein.

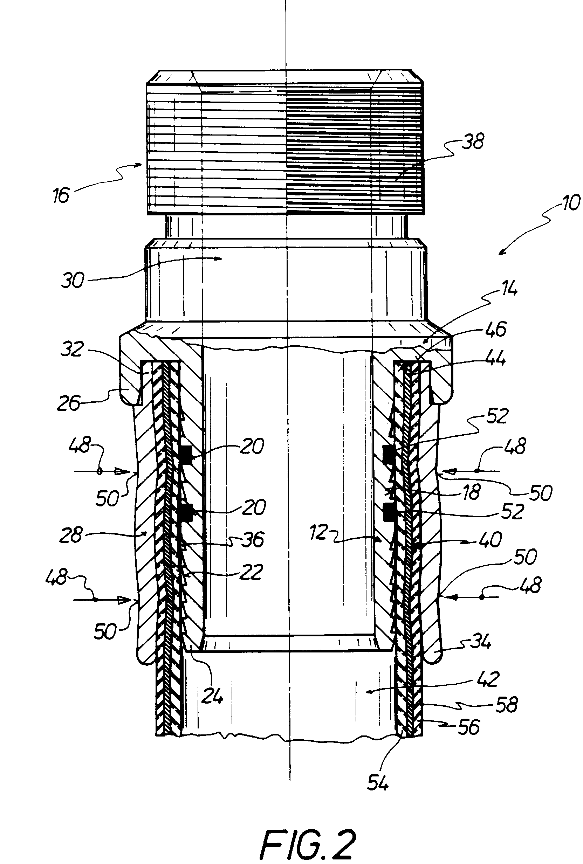

Fig. 2 zeigt die Anschlußvorrichtung 10 gemäß Fig. 1 mit einem Endabschnitt 40 eines Rohres 42, wobei der Endabschnitt 40 des Rohres 42 in den Ringraum 36 (sh. Fig. 1) der Anschlußvorrichtung 10 eingesteckt ist, so daß die ringförmige Stirnfläche 44 des Rohres 42 an der Grundfläche 46 des Verbindungsabschnittes 14 des Fittingkörpers 30 anliegt. Anschließend wird mit einem geeigneten (nicht gezeichneten) Verformwerkzeug, bei dem es sich um eine elektrisch betriebene Verpreßzange handeln kann, gegen die Außenhülse 28 gedrückt und die eine Verpreßhülse bildende Außenhülse 28 mit dem Endabschnitt 40 des Rohres 42 gegen die Außenmantelfläche 18 der Stützhülse 12 gepreßt. Das ist durch die Pfeile 48 in Fig. 2 angedeutet. Aus dieser Figur sind auch die um die Anschlußvorrichtung 10 bzw. deren Außenhülse 28 umlaufenden Fixierabschnitte 50 in der unmittelbaren Nachbarschaft der Pfeile 48 zu erkennen.

Die dichte Verbindung des Endabschnittes 40 des abschnittweise gezeichneten Rohres 42 mit der Anschlußvorrichtung 10 wird insbes. durch Ringdichtungen 52 bewirkt, die in den umlaufenden Rillen 20 der Stützhülse 12 angeordnet sind.

In Fig. 2, in der gleiche Einzelheiten wie in Fig. 1 mit denselben Bezugsziffern wie dort bezeichnet sind, ist ein Endabschnitt 40 eines Rohres 42 gezeichnet, das als Mehrschicht-Metall-Verbundrohr mit einer Kunststoffinnenlage 54, einer Kunststoffaußenlage 56 und einer zwischen der Kunststoffinnenlage und der Kunststoffaußenlage 56 vorgesehenen Metallzwischenschicht 58 ausgebildet ist. Ein solches Mehrschicht-Metall-Verbundrohr 42 ist bspw. im Prospekt der Anmelderin "UNIPIPE" offenbart. Die Metallzwischenschicht 58 eines derartigen Mehrschicht-Metall-Verbundrohres 42 dient insbes.zur Ausbildung einer Diffusionssperre.

## Patentansprüche

1. Zum Anschließen eines Endabschnittes (40) eines Rohres (42) vorgesehene Anschlußvorrichtung mit einer am Rohrendabschnitt (40) innen abdichtend anliegenden Stützhülse (12) und mit einer diese konzentrisch umgebenden, am Rohrendabschnitt (40) außen anliegenden Außenhülse (28), die mit der Stützhülse (12) mittels eines Verbindungsabschnittes (14) verbunden ist, und mit einem Kupplungselement (16), das auf der von der Stütz- und der Außenhülse (12, 28) abgewandten Seite des Verbindungsabschnittes (14) vorgesehen ist, wobei die Außenhülse (28) aus einem plastisch verformbaren Material besteht und eine Verpreßhülse bildend von außerhalb der Vorrichtung (10) mittels eines geeigneten Verformwerkzeugs zugänglich und plastisch derart verformbar ist, daß der Rohrendabschnitt (40) entlang mindestens eines Fixierabschnittes (50) zwischen der Außen- und der Stützhülse (28, 12) abdichtend fixiert ist, das Kupplungselement (16) vom Verbindungsabschnitt (14) einstückig wegsteht,
die ein Aufweiten des Rohrendabschnittes (40) vermeidende Stützhülse (12), der Verbindungsabschnitt (14) und das Kupplungselement (16) einen einstückigen Fittingkörper (30) bilden, die Außenhülse (28) aus einem vom Material des Fittingkörpers (30) verschiedenen Material besteht und am Verbindungsabschnitt (14) des Fittingkörpers (30) dadurch fixiert ist, daß die Außenhülse (28) mit dem Fittingkörper (30) verpreßt ist, und die Stützhülse (12) des Fittingkörpers (30) an ihrer Außenmantelfläche (18) mindestens eine umlaufende Rille (20) zur Aufnahme einer Ringdichtung (52) aufweist und mit einer umlaufenden Sägezahnung ausgebildet ist,
**dadurch gekennzeichnet,**
daß der Fittingkörper (30) aus porenfrei vernickeltem, weichgeglühtem Messing oder aus Rotguß und die Außenhülse (28) aus einem korrosionsfesten Material, vorzugsweise aus Edelstahl, besteht, daß der Verbindungsabschnitt (14) einstückig mit einem zur Stützhülse (12) konzentrischen Kragen (26) ausgebildet ist, und daß die Außenhülse (28) durch Verpressen des Kragens (26) am Fittingkörper (30) fixiert ist.

2. Verwendung einer Vorrichtung nach Anspruch 1 zum dichten Anschließen an einen Endabschnitt (40) eines eine dünne Metall-Diffusionssperrlage (58) aufweisenden Mehrschicht-Metall-Verbundrohres (42).

## Claims

1. A pipe end fitting provided for connecting an end section (40) of a pipe (42), with a supporting sleeve (12) bearing on the pipe end section (40) with a seal on the inside, and with an outer sleeve (28) concentrically surrounding the latter bearing on the pipe end section (40) on the outside, which outer sleeve is connected to the supporting sleeve (12) by means of a connecting section (14), and with a coupling element (16) which is provided on the side of the connecting section (14) that is remote from the supporting sleeve (12) and the outer sleeve (28), in which arrangement, the outer sleeve (28) consists of a plastically deformable material and,forming a press sleeve, is accessible from outside the fitting (10) and plastically deformable by means of a suitable deforming tool, in such a way that the pipe end section (40) is fixed along a fixing section (50) between the outer sleeve (28) and the supporting sleeve (12) with a sealing effect; the coupling element (16) projects as a single piece; the supporting sleeve (12) preventing a widening of the pipe end section (40), the connecting section (14) and the coupling element (16) form an integral fitting body (30); the outer sleeve (28) consists of a material different from the material of the fitting body (30) and is fixed on the connecting section (14) of the fitting body (30) in that the outer sleeve (28) is press-fitted together with the fitting body (30), and the supporting sleeve (12) of the fitting body (30) has at least one peripheral groove (20) for receiving a ring seal (52) on its outer peripheral surface (18) and is designed with a peripheral sawtooth system,
**characterized in that**
the fitting body (30) consists of a non-porous nickelled soft-annealed brass or of gunmetal, and the outer sleeve (28) consists of a corrosion-resistant material, preferably high grade steel, that the connecting section (14) is integrally formed with a collar (26) concentric with the supporting sleeve (12), and that the outer sleeve (28) is fixed on the fitting body (30) by the press-fitting of the collar (26).

2. Use of a fitting according to claim 1 for the leakproof connection to an end section (40) of a multilayer metal compound pipe (42) having a thin metal layer (58) preventing diffusion.

## Revendications

1. Raccord pour la connexion d'une section terminale (40) d'un tube (42) avec une douille d'appui (12) disposée à l'intérieur de la section terminale (40) du tube en en assurant l'étanchéité et avec une douille extérieure (28) entourant concentriquement la précédente et située à l'extérieur de la section (40) et qui est réunie à la douille d'appui (12) au moyen d'une section de liaison (14), et avec un élément d'accouplement (16) qui est prévu sur les côtés se faisant face des douilles d'appui et extérieure (12, 14) de la section de liaison (14), raccord du type dans lequel
- la douille extérieure (28) est réalisée en une matière plastique déformable et qui peut être accessible et déformée plastiquement depuis l'extérieur du dispositif (10) au moyen d'un outil de déformation approprié en formant une douille comprimée de manière telle que la section terminale (40) du tube est fixée de façon étanche le long d'une section de fixation (50) entre les douilles extérieures et d'appui (28, 12)
- l'élément d'accouplement (16) est en une seule pièce éloignée de la section de liaison (14)
- la douille d'appui (12) qui empêche l'évasement de la section terminale (40) du tube, la section de liaison (14) et l'élément d'accouplement (16) forment un corps de montage (30) en une seule pièce, en une matière différente de celle du corps de montage (30), et est fixée à la section de liaison (14) du corps de montage (30) de manière telle que la douille extérieure (28) est comprimée avec le corps de montage (30) et
- la douille d'appui (12) du corps de montage (30) présente sur sa surface extérieure (18) au moins une rainure périphérique (20) destinée à recevoir un joint annulaire (52) et comporte une denture en dents de scie,
**caractérisé en ce que**
le corps de montage (30) est réalisé en laiton recuit mou nickelé exempt de pores ou en fonte de cuivre et la douille extérieure (28) est réalisée en un matériau résistant à la corrosion, de préférence en acier spécial, la section de liaison (14) est en une seule pièce avec une collerette (26) concentrique à la douille d'appui (12) et la douille extérieure (28) est fixée au corps de montage (30) par compression de la collerette (26).

2. Application d'un raccord selon la revendication 1 à la connexion étanche d'une section terminale (40) d'un tube de liaison en métal multicouches (42) comportant une couche mince constituant barrière de diffusion pour les métaux.
